Europäisches Patentamt

European Patent Office

Office européen des brevets

(19)

(11) **EP 0 476 800 B1**

(12) **EUROPEAN PATENT SPECIFICATION**

(45) Date of publication and mention
of the grant of the patent:
**28.02.1996  Bulletin 1996/09**

(51) Int Cl.⁶: **H01S 3/06**, G01C 19/72

(21) Application number: **91302184.6**

(22) Date of filing: **14.03.1991**

(54) **Large signal three-level superfluorescent fiber sources**

Superfluoreszierende Dreiniveau-Faserlichtquellen von hoher Ausgangsleistung

Sources superfluorescentes à trois niveaux à haute puissance en fibre optique

(84) Designated Contracting States:
**DE FR GB IT**

(30) Priority: **18.09.1990 US 584806**
**07.03.1991 US 666264**

(43) Date of publication of application:
**25.03.1992  Bulletin 1992/13**

(73) Proprietor: **THE BOARD OF TRUSTEES OF THE LELAND STANFORD JUNIOR UNIVERSITY**
**Stanford, California 94305-6225 (US)**

(72) Inventors:
 • **Kalman, Robert F.**
   **Sunnyvale, California 94086 (US)**
 • **Digonnet, Michael J. F.**
   **Palo Alto, California 93406 (US)**
 • **Wysocki, Paul F.**
   **Stanford, California 94305 (US)**

(74) Representative: **Maury, Richard Philip et al**
**Sommerville & Rushton**
**11 Holywell Hill**
**St. Albans Herts. AL1 1EZ (GB)**

(56) References cited:
**WO-A-89/09506**

 • **FIBER LASER SOURCES AND AMPLIFIERS II. SPIE PROCEEDINGS vol. 1373, 18 September 1990, BELLINGHAM, US pages 209 - 222 R.F. KALMAN ET AL. 'Modeling of three- level laser superfluorescent fiber sources'**
 • **IEEE PHOTONICS TECHNOLOGY LETTERS vol. 2, no. 4, April 1990, NEW YORK US pages 237 - 238 K. IWATSUKI 'Er-doped superfluorescent fiber laser pumped by 1.48 mum laser diode'**
 • **14TH EUROPEAN CONFERENCE ON OPTICAL COMMUNICATION (ECOC 88). PART 1. 11 September 1988, LONDON, GB pages 54 - 57 R.I. LAMING ET AL. 'Noise in Erbium-doped fibre amplifiers'**
 • **JOURNAL OF LIGHTWAVE TECHNOLOGY. vol. 7, no. 5, May 1989, NEW YORK US pages 835 - 845 E. DESURVIRE ET AL. 'Amplification of spontaneous emission in Erbium- doped single-mode fibers'**

## Description

The present invention is in the field of light sources, and more particularly, in the field of rare earth-doped superfluorescent fiber sources in which an optical fiber is doped with a medium that can lase and in which the optical fiber is pumped with a pump optical signal to generate an output signal to be detected by a detector.

Optical fibers are being used for an increasing number of applications. One such application is an optical fiber rotation sensor comprising a loop of optical fiber into which two light signals are introduced and caused to counterpropagate around the optical loop. Such rotation sensors are described, for example, in U.S. Patent No. 4,410,275; U.S. Patent No. 4,456,377; U.S. Patent No. 4,487,330; U.S. Patent No. 4,634,282; and U.S. Patent No. 4,637,722.

For such rotation sensors and for other optical fiber applications, it is desirable to have a stable well-controlled light source.

For some applications, such as certain optical fiber rotation sensors, a high power broadband optical energy source having a short temporal coherence length and no longitudinal mode structure at longer wavelengths is desirable. It has been demonstrated that using a broadband optical energy source in an optical fiber rotation sensor, for example, reduces phase errors caused by the Kerr effect. A broadband optical signal can also be advantageously used to reduce phase errors in the combined optical signal from the loop of the rotation sensor caused by coherent backscattering (i.e., Rayleigh backscattering) and by polarization cross-coupling in the loop. See, for example, U.S. Patent No. 4,773,759; U.S. Patent No. 5,120,130 and U.S. Patent No. 4,881,817.

A theoretical analysis regarding the broadband source requirement for fiber gyroscopes can be found in W.K. Burns, et al., "Fiber-Optic Gyroscopes with Broad-Band Sources," Journal of Lightwave Technology, Volume LT-1, Number 1, pp. 98-105, March 1983.

Optical fiber rotation sensors also require sources with highly stable mean wavelengths with little thermal drift. A rotation sensor source must also have the ability to couple high power into the rotation sensor without creating large noise components (high signal/noise ratio). Finally, an ideal rotation sensor source preferably operates in higher wavelength region of the optical spectrum of the source in order to reduce any sensitivity to radiation.

Such broadband optical sources include, for example, superluminescent light emitting diodes, and the like. An exemplary superluminescent diode has a relatively broad optical linewidth (e.g. approximately 15 nm) at the optical wavelengths in the range of 800 to 850 nm, for example. However, for a given power input, exemplary superluminescent diodes may not provide an adequate amount of optical energy when compared to a laser, for example. More importantly, superluminescent diodes cannot be easily coupled to certain optical devices such as gyroscopes as the light emitted by superluminescent diodes is highly divergent. In particular, the power produced by a superluminescent diode is difficult to efficiently couple into single-mode fibers. Furthermore, it is known that the temperature stability of the emission wavelength of a typical superluminescent diode is not satisfactory for numerous applications. The mean wavelength of superluminescent diodes varies about -300 ppm/°C, which is inadequate for high sensitivity gyroscope applications that often require a mean wavelength stable to about 1 ppm.

More recently, U.S. Patent No. 4,637,025 to Snitzer, et al., described a superradiant light source that includes an optical fiber having a core doped with a selected active laser material such as Neodymium.

U.S. Patent No. 4,938,556 discloses a superfluorescent fiber source comprising a fiber doped with laser material coupling to a multiplexing coupler.

Such a superfluorescent source has good output power and easily couples to an optical fiber rotation sensor. It does not have longitudinal cavity modes and shows good thermal stability. Its spectrum is much broader than a resonant laser source.

U.S. Patent No. 4,964,131 describes a light source which uses an optical fiber doped with a lasing material such as Neodymium.

The optical fiber is pumped with a pump optical signal having a pump wavelength selected to cause spontaneous emission of an optical signal at a second wavelength different from the pump wavelength. The wavelength of the pump optical signal is selected to be outside the pump variable tuning range of the Neodymium-doped optical fiber (i.e., the range of pump wavelengths which stimulate emitted wavelengths having an average wavelength with a generally one-to-one correspondence to the pump wavelength). Pumping with a pump signal outside the pump variable tuning ranges causes the emitted light to have a broad spectral envelope of longitudinal modes having emission wavelengths corresponding to substantially all the pump variable tuning range.

Neodymium-doped superfluorescent fiber sources have therefore alleviated the problems raised by either resonant cavity lasers or superluminescent diodes. Such sources can deliver milliwatts of power into a fiber optic gyroscope with broadband spectra and good thermal stability.

In recent years, Erbium-doped fibers have received increasing attention as possible sources and for amplification purposes in the low loss fiber communication window at 1500 nm. It is possible to obtain a high gain when the Erbium dopant is properly doped into the fiber, typically a silica fiber. The light emitted by Erbium-doped fibers easily couples into other fibers with similar mode sizes. An Erbium-doped fiber is also thermally relatively stable. Additionally, Erbium-doped fibers emit longer wavelength light than Neodymium-doped fibers, which makes them less sensitive to radiation induced loss mechanisms.

A theoretical analysis of amplified spontaneous emission can be found in an article by E. Desurvire et al., "Amplification of Spontaneous Emission in Erbium-Doped Single-Mode Fibers," Journal of Lightwave Technology, Volume 7, No. 5, pp. 835-845 (May 1989). The operation of an Erbium-doped silica fiber as a superfluorescent source at 1535 nm and pumped at 980 nm is also reported in an article by P. R. Morkel, "Erbium-Doped Fibre Superluminescent Source for the Fibre Gyroscope," Springer Proceedings in Physics, Volume 44, in Optical Fiber Sensors, Springer-Verlag Berlin, Heidelberg 1989. This article analyses the variation of superfluorescent output power with the pump power and the fiber length and observes the dependence of the spectrum of the superfluorescent emission on fibre length, pump power and fiber temperature. However, that article does not propose any method for minimizing the thermal variations of the output spectrum.

Although both Neodymium- and Erbium-doped fiber sources have a much better temperature stability than superluminescent diodes and resonant cavity lasers, there still is a need for a high power light source using an optical fiber structure with very little thermal drift and a high quantum efficiency.

Accordingly, the present invention provides a light source as defined in Claim 1, interferometer apparatus as defined in Claim 5, and a method as defined in Claim 8 of manufacture of a light source.

The pump source may be a laser diode. The optical waveguide may comprise a single-mode fiber doped with lasing material. The active medium preferably includes a three-level system, such as Erbium. The optical waveguide may comprise an optical fiber having an input end and an output end, and may have a reflector positioned proximate to the input end of the optical fiber. The reflector may be substantially reflective to the emitted radiation and substantially transmissive to the pump light. In another configuration, it can be substantially transmissive to the emitted radiation and substantially reflective to the pump light. It may comprise a dichroic mirror.

The active medium is preferably a three-level system, and the forward signal is substantially attenuated by ground state absorption. The quantum efficiency of the backward signal may be substantially greater than the quantum efficiency of the forward signal.

The method of the present invention may comprise the step of selecting the active material of the active medium among the rare earth group, and more particularly among three-level systems, and may further comprise the step of selecting said length so that said forward signal is substantially zero.

## Brief Description of the Drawings

Figure 1 illustrates an exemplary embodiment of a light source of the present invention comprising an Erbium-doped fiber;

Figure 2 is a diagram of a superfluorescent fiber source used in the modelization of a three-level system;

Figure 3 represents the signal and pump evolution characteristics for a 4.0 m long fiber and 100 mW of input pump as a function of the fiber length;

Figure 4 is a plot of the population inversion parameter a(z) and normalized signal gain coefficient $(N_2\sigma_e - N_1\sigma_a)/N_d\sigma_e$, as a function of the fiber length;

comprising a forward signal and a backward signal propagating in opposite directions, the length of the waveguide being selected so that the quantum efficiency of the backward signal is greater than 50%. The interferometer preferably comprises a Sagnac interferometer. The optical waveguide may comprise an Erbium-doped single mode optical fiber.

According to a further aspect of the present invention, there is disclosed a method of manufacturing a light source comprising an optical waveguide comprised of an active medium, the method comprising the steps of optically coupling a pump source to the active medium at a pump wavelength to cause the active medium to emit a light signal, the emitted light signal comprising a forward signal and a backward signal which propagate in opposite directions; and selecting the length of the waveguide so that the quantum efficiency of the backward signal is greater than 50%.

The method of the present invention may comprise the step of selecting the active material of the active medium among the rare earth group, and more particularly among three-level systems, and may further comprise the step of selecting said length so that said forward signal is substantially zero.

## Brief Description of the Drawings

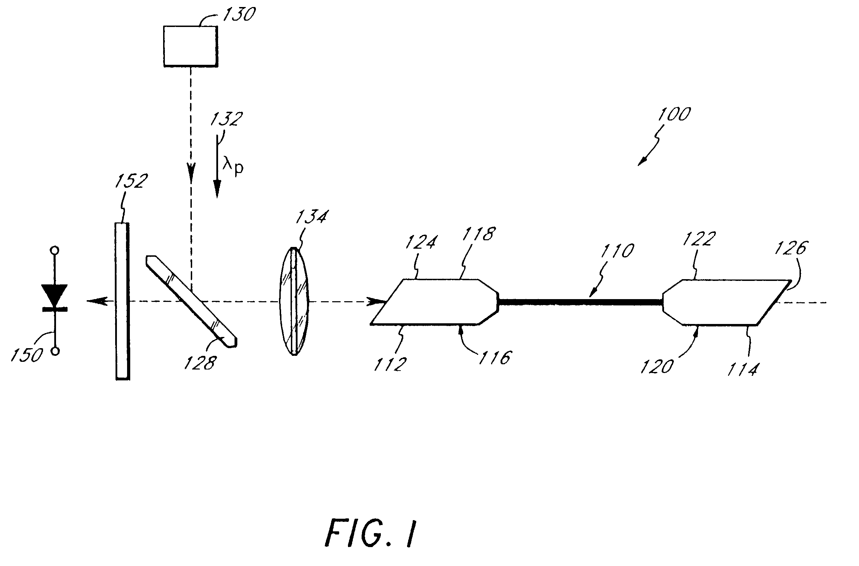

Figure 1 illustrates an exemplary embodiment of a light source of the present invention comprising an Erbium-doped fiber;

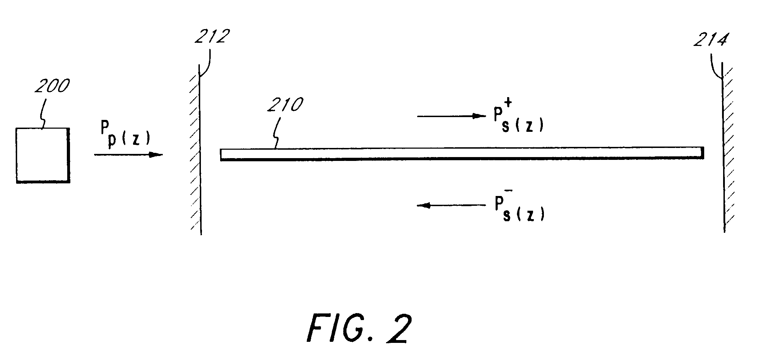

Figure 2 is a diagram of a superfluorescent fiber source used in the modelization of a three-level system;

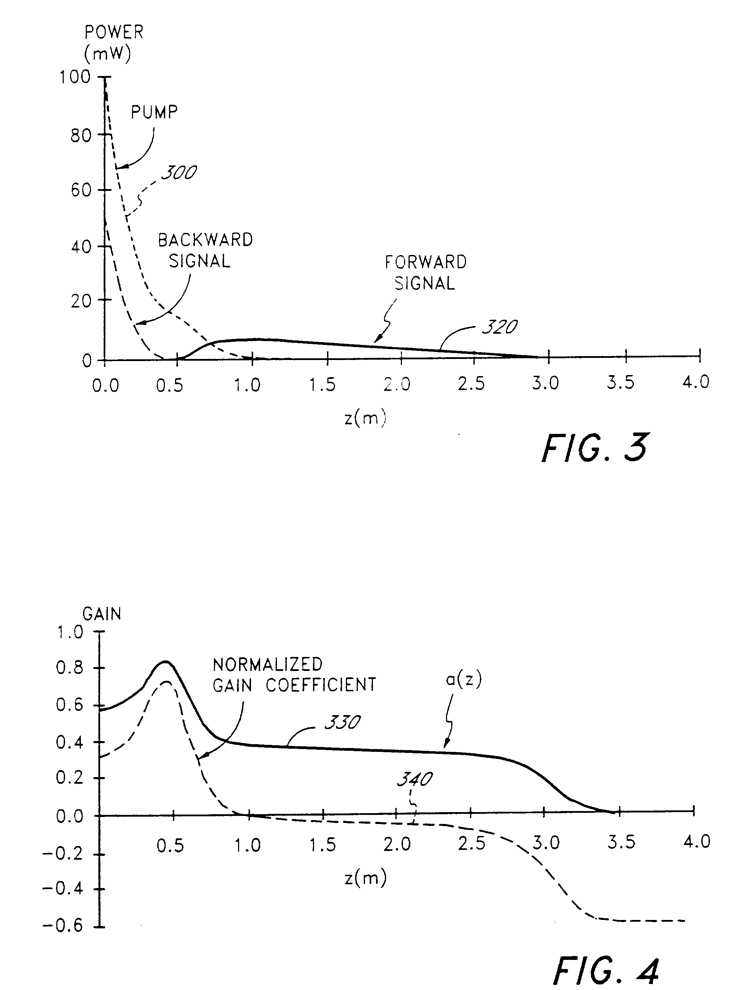

Figure 3 represents the signal and pump evolution characteristics for a 4.0 m long fiber and 100 mW of input pump as a function of the fiber length;

Figure 4 is a plot of the population inversion parameter a(z) and normalized signal gain coefficient $(N_2\sigma_e-N_1\sigma_a)$ $/N_d\sigma_e$ as a function of the fiber length;

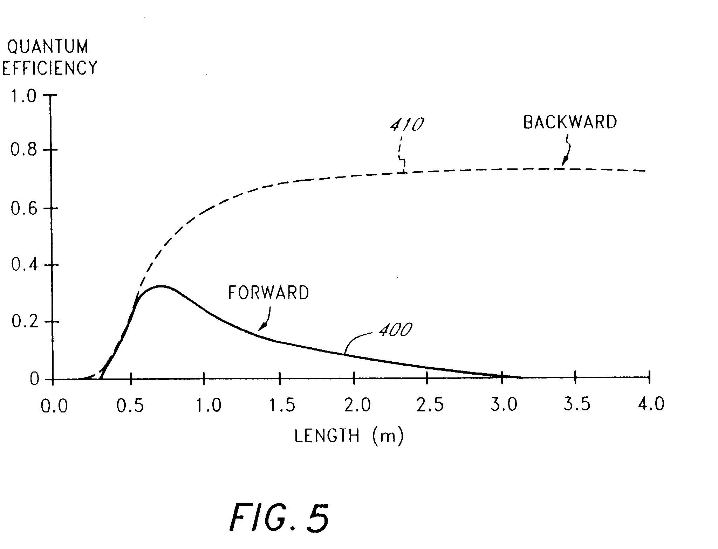

Figure 5 is a graph of the forward and backward quantum efficiency as a function of fiber length for 100 mW of input pump power;

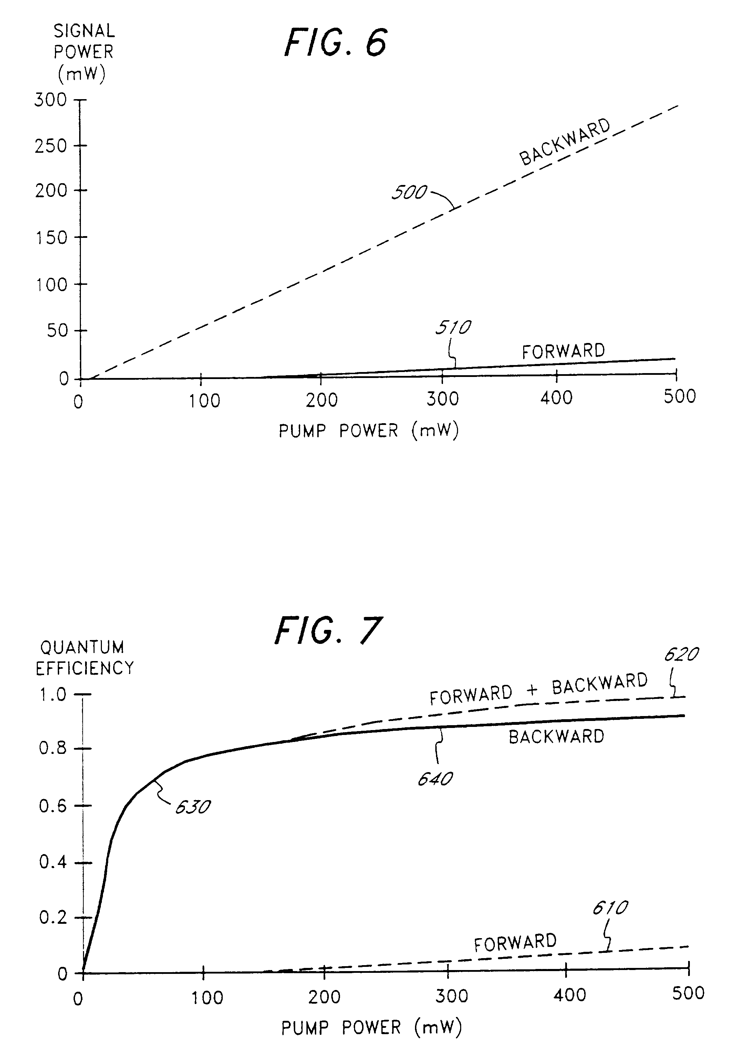

Figures 6 and 7 are graphic representations of the signal power and of the quantum efficiency as a function of input pump power for a 4 m long fiber;

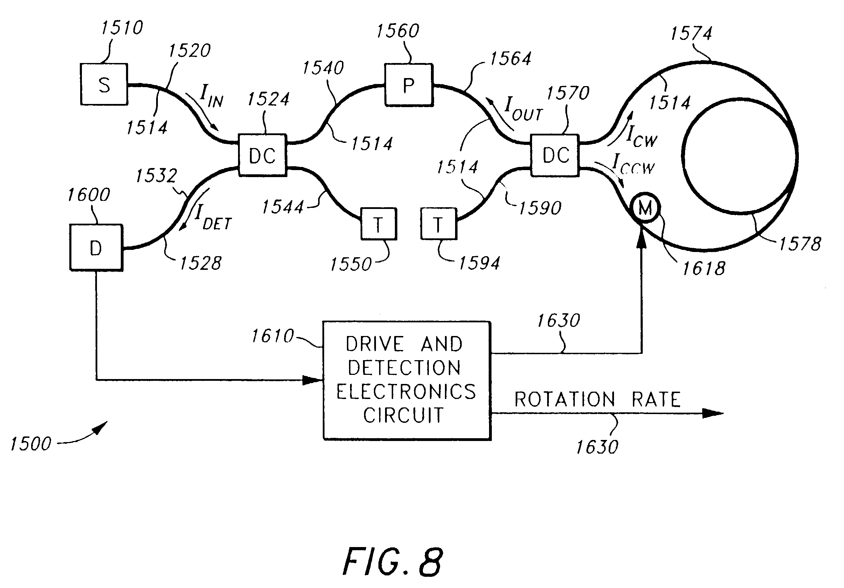

Figure 8 represents an exemplary rotation sensor using the light source of the present invention;

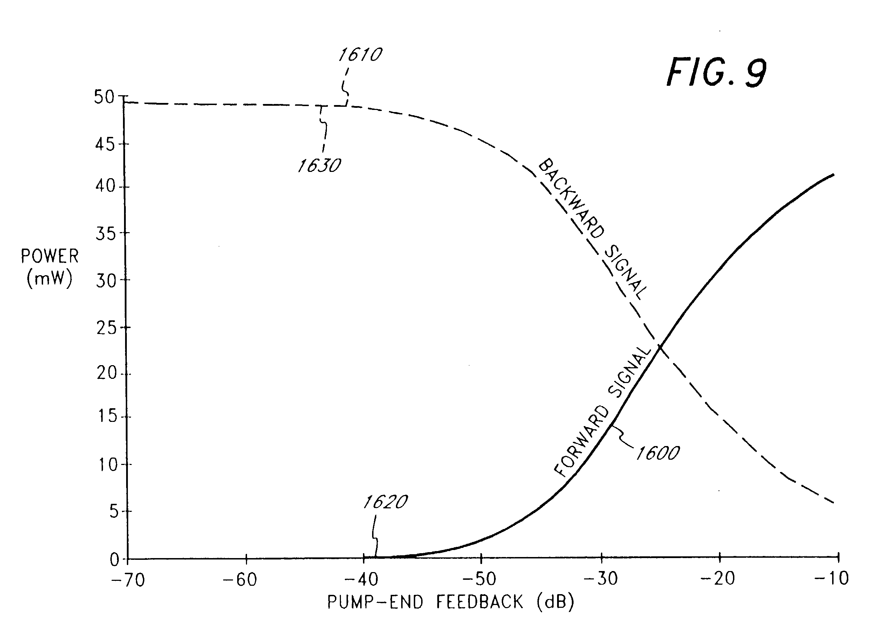

Figure 9 is a plot of the forward and backward signal power as a function of the pump-end feedback.

## Detailled Description of the Preferred Embodiment

Superfluorescent sources (SFS) refer to non-resonant fiber sources which output light emitted through amplified spontaneous emission (ASE). They typically comprise a waveguide such as a single strand of active fiber doped with a lasing material. The fiber is optically end-pumped at a sufficiently high level that a single pass gain becomes very large, so that the spontaneously emitted photons captured by the fiber core and traveling through the fiber experience a large amplification. The output power of the fiber can reach a significant fraction of the pump power launched into the fiber.

The optical fiber can be doped with a lasing material such as Erbium or Neodymium so as to produce output light through both ends of the fiber at one or several emission wavelengths. The optical fiber source produces emission in both the forward direction, i.e., in the direction of propagation of the pump signal and the backward direction, i.e., in the opposite direction of propagation of the pump signal. The simplest the of transition is the four-level laser transition which is well represented by the Nd:silica system. Pump photons are absorbed from the ground state to a much higher pump state. Relaxation occurs rapidly to a long lasting upper laser state. The laser transition occurs between this excited state and a lower laser state which should empty out rapidly back to the ground state. Because the lower laser state remains empty, signal absorption is not present in a four-level gain medium. In a four-level laser transition such as the 1060 nm $^4F_{3/2}->^4I_{11/2}$ transition in Nd-doped silica, the forward and backward output powers are substantially equal if the fiber loss is negligible compared to the single pass gain, which is generally the case.

The three-level transition of Er:silica is considerably more complex than the four-level transition described for Neodymium. In such a system, the ground state and the lower laser state are combined into a single state. Hence, both the upper and lower laser levels remain occupied according to Boltzman statistics. Signal emission and signal absorption are both possible. These two processes are often separated by defining separate emission and absorption cross-sections which are weighted by the probabilities of occupation of the levels acting in each case. Emission occurs from the occupied lower levels of the upper laser state to the lower laser state while absorption occurs from the occupied lower levels of the lower laser state to the upper laser state. In a three-level laser transition such as the 1550 nm $^4I_{13/2}\rightarrow^4I_{15/2}$ transition in Er-doped silica, the forward signal is attenuated by ground state absorption more strongly than the backward signal and generally carries less power than the latter.

Thus, several important differences exist between the operation of $Nd:SiO_2$ fiber sources near 1060 nm and $Er:SiO_2$ fiber sources near 1550 nm. As indicated above, the 1060 nm $^4F_{3/2}\rightarrow^4I_{11/2}$ transition in Nd-doped silica is a four-level laser transition whereas the 1550 nm $^4I_{13/2}\rightarrow^4I_{15/2}$ transition in Er-doped fiber is a three-level laser transition. In the Er-doped fiber, the signal suffers from strong ground state absorption (GSA) when traveling through the unpumped fiber. A relatively large amount of pump power must be absorbed by the fiber just to create a population inversion and a net gain.

The second difference is that for several of the pump bands of $Er:SiO_2$ readily covered by standard laboratory lasers, in particular near 514.5 nm, 600 nm and 800 nm, the pump photons suffer from significant absorption from the upper laser state, a mechanism known as excited state absorption (ESA). This undesirable effect also results in an increased pump power requirement. However, two useful pump bands have been identified where pump ESA is negligible, namely near 980 and 1480 nm. For lack of a better pump source, early laboratory investigations operated devices at $\lambda_p$=514.5 and 800 nm. More recently, devices have been pumped at either of the two ESA-free wavelengths using a dye laser or a Titanium Sapphire laser. See for example Oki, Monterey Conference Paper, and D.P. Bour et al., "980 nm Diode Laser for Pumping Erbium-Doped Fiber Amplifiers," IEEE Photon. Techno. Lett. 2, 3, 153-155 (March 1990), R.I. Laming et al., "Pumped Excited State Absorption in Erbium-Doped Fibres," Optics Letters 13, 12, 1084-1086 (Dec. 1988), P.R. Morkel, "Erbium-Doped Fibre Superfluorescent Source for the Fibre Gyroscope," Optical Fiber Sensors, Springer Proceedings in Physics, Vol. 44, p. 143 (1989), P.F. Wysocki et al., "Broad Spectrum, Wavelength Swept Erbium-Doped Fiber Laser at 1550 nm," Opt. Lett. 15, 16, 879-881 (Aug. 1990), P.F. Wysocki et al., "1550 nm Broadband Fiber sources Pumped near 980 nm," Fiber Laser Sources and Amplifiers II, Proc. SPIE 1371 (1990), and P.F. Wysocki et al., "Spectral Characteristics of High Power 1550 nm Broadband Superluminescent Fiber Sources," IEEE Photon. Techno. Lett. 2,3, 178-180 (March 1990).

Theoretical expressions have been derived for the output power dependence on pump power, and for the threshold and conversion efficiency of SFS's doped with material having a four-level laser transition, for example in an article by M.J.F. Digonnet, "Analysis of a 1060-nm Nd:SiO$_2$ Superfluorescent Fiber Laser" J. Lightwave Technol., vol. 7, no. 7, pp. 1009-1015, 1989 and in another article by M.J.F. Digonnet, "Theory of Superfluorescent Fiber Lasers," J. Lightwave Technol., vol. 4, no. 11, pp. 163-1639, 1986.

Those theoretical expressions predict, as confirmed by experiments, that as the pump power is increased the output power increases at first slowly, then exponentially as the ASE becomes dominant, and finally linearly when the gain becomes saturated by the strong circulating signals. In the limit of very high pump power, the conversion efficiency S of these sources, defined as the slope of the linear output region, is given by:

$$S = \varepsilon \frac{h\nu_s}{h\nu_p} \qquad (1)$$

The terms $h\nu_s$ and $h\nu_p$ are the signal and pump photon energies, respectively and $\varepsilon$ is a constant. The conversion efficiency is also referred as the quantum efficiency (QE) of the backward signal and of the forward signal. The quantum efficiency of the output signal is defined as the ratio of the number of photons in the output signal to the number of pump signal photons input to the fiber. Correspondingly, the quantum efficiency of the backward signal (respectively the forward signal) is defined as the ratio of the number of photons output by the backward (resp. forward) signal at an output end of the fiber to the number of pump signal photons input to the fiber. The quantum efficiency characterizes well the operation of a SFS. Several types of SFS's arrangements are possible. In a single pass device, both the forward and the backward signals pass once through the fiber. In a double pass device, either the backward signal or the forward signal is partially re-injected into the fiber by the reflecting end portion of the fiber and experiences amplification as it travels to the opposite end of the fiber. In the double pass SFS, the constant $\varepsilon$ is less or equal to 1. Therefore, the high pump conversion efficiency approaches the ratio of $h\nu_s/h\nu_p$, i.e. essentially all the absorbed pump photons are transformed into output photons. For a single pass SFS, the constant $\varepsilon$ is less or equal to 1/2 in a four-level system. It is greater than 1/2 in a three-level system in accordance with the invention of claims 5 and 8. The conversion efficiency is half as large, since equal numbers of photons are generated in the forward and backward directions. Both configurations can therefore be operated at efficiencies comparable to that of a resonant fiber laser although the single pass source exhibits a higher threshold, a lower efficiency, and consequently a high pump power requirement. See for example M.J.F. Digonnet, "Theory of Superfluorescent Fiber Lasers," J. Lightwave Technol., vol. 4, no. 11, pp. 163-1639, 1986 and M.J.F. Digonnet and C.J. Gaeta "Theoretical Analysis of Optical Fiber Laser Amplifiers and Oscillators," Appl. Opt. 24, 3, 333-342 (Feb. 1985).

Despite significant differences in the details of their physics and operating conditions, SFS's based on three-level laser transitions should also exhibit substantial conversion efficiencies and high output power and efficiencies. See for example R.F. Kalman et al., "Modeling of 3-level Laser Superfluorescent Fiber Sources" Fiber Laser Sources and Amplifiers II, Proc. SPIE 1373 (1990).

The major difference with four-level SFS's is that the forward and backward output powers are generally different because of ground state absorption (GSA). The signal is generated in the fiber region where the gain is positive, and attenuated where the gain is negative. In an end-pumped three-level fiber of sufficient length, the gain is positive over a finite region, near the pump input end, and negative towards the far end of the fiber. On the other hand the backward signal is not affected by the far end of the fiber since it does not travel through it. The net result is that the forward signal is always smaller than the backward signal. The forward and backward signal output powers are similar only in highly pumped short fibers. As the fiber length is increased, the difference between the forward and backward signal powers increases.

Advantageously, along the negative gain region of the fiber where the forward signal is attenuated by GSA, some of the absorbed photons are also re-emitted via spontaneous emission. The fraction of re-emitted photons captured by the fiber core in the backward direction travels through the positive gain region of the fiber where it is amplified, and can contribute to a significant increase in the backward signal. This effect becomes stronger as the fiber length is increased. It is in fact so strong that for long enough fibers excited with a high enough pump power, a portion of the forward signal is converted into the backward signal, and conversion efficiency substantially greater than 50% can be obtained in the backward direction. This behavior is in sharp contrast with that of a single-pass four-level SFS, for which the conversion efficiency does not exceed 50% in either direction. Er:SiO$_2$ SFS's should therefore be more efficient than Nd:SiO$_2$ SFS's. The present invention uses and implements this unexpected effect.

Figure 1 illustrates an exemplary embodiment of the present invention which can be advantageously used as a light source for a gyroscope as described in more detail hereinbelow. As illustrated, a fiber source 100 comprises an optical waveguide 110 that may be a single-mode optical fiber. In the embodiment shown in Figure 1, the fiber 110 is formed of a silica glass that is doped with Erbium (Er) which emits output light at one or several emission wavelengths in response to a pump optical signal at a selected pump wavelength. For example, the optical fiber 110 may be doped with a concentration of Erbium in the range of 50 ppm to 2000 ppm. The optical fiber 110 of Figure 1 is a conventional telecommunications type of optical fiber of SiO$_2$, doped with approximately 1600 ppm of Erbium. The optical fiber 110 used in the embodiment shown in Figure 1 may be co-doped with Aluminum and Phosphorus. The exemplary optical fiber 110 has a core radius of approximately 2.2 microns and a cladding diameter of approximately 80 microns. The aperture number NA of the fiber shown in Figure 1 is 0.2. Although an Erbium-doped optical fiber is preferable in the present invention, the optical fiber 110 can be doped with another suitable lasing material. The optical fiber 110 used in the embodiment of Figure 1 is manufactured by AT&T Bell Lab, New Jersey. Other optical fibers are readily available, such as Erbium-doped fibers manufactured by GTE Inc.

The optical fiber 110 can absorb light at a multiplicity of absorption wavelengths. For example, at the absorption wavelength of 650 nm (Ar$^+$ pump DCM dye laser), the rate of absorption is 5 dB/m for an Erbium-doped fiber having a concentration of 300 ppm of Erbium. See for example an article by Mears et al., "Low-noise Erbium-doped fiber amplifier operating at 1.54 $\mu$m." Electr. LeH. Vol. 23, 19, pp. 1026-1027, September 1987. When pumped with an optical signal at a pump wavelength in the absorption range of Erbium which is in the range of 500 nm to 1500 nm, at a sufficient intensity of the pump radiation, the Erbium doping emits light in an emission range of approximately 1528 nm to approximately 1580 nm, depending upon the pump wavelength and the pump intensity, as will be discussed more fully below. More specifically, the absorption peaks of Erbium are near 528 nm, 650 nm, 800 nm, 980 nm and 1490 nm. There are two peaks of emission at 1533 nm and 1559 nm. There is an additional emission of light at 1580 nm but such emission has a substantially lower intensity.

Referring again to Figure 1, the optical fiber 110 has a first end 112 and a second end 114. A first end portion 116 of the optical fiber 110 proximate to the first end 112 may be enclosed within a first capillary tube 118 to provide support for the first end portion 116 and to provide a means for accurate alignment of the first end portion 116. Similarly, a second end portion 120 of the optical fiber 110 proximate to the second end 114 may be enclosed within a second capillary tube 122. Both the first end 112 and the second end 114 may be ground and polished so as to define planar surfaces 124, 126 inclined at an angle greater than 10°, e.g., in the embodiment of Figure 1, at approximately 15° with respect to the transversal axis of the first end portion 116 and the second end portion 120, respectively. The inclined planar surfaces 124 and 126 guarantee no reflection and hence no resonant structure. In the embodiment of Figure 1, the planar surfaces 124, 126 minimize reflections estimated to be at a -60 dB level. The proximal end of the first capillary tube 118 is ground and polished at the same time as the first end 112 of the optical fiber 110 so that the proximal end of the first capillary tube 118 is coplanar with the planar surface 124. Similarly, the distal end of the second capillary tube 122 is ground and polished at the same time as the second end 114 of the optical fiber 110 so that the distal end of the second capillary tube 122 is coplanar with the planar surface 126. In the embodiment of Figure 1, the detector 150 is located near the proximal end 112 of the fiber 110.

The optical fiber 110 at the concentration mentioned above has a length that is preferably greater than 0.5 meter and which may be increased to any length. The length of the fiber can be varied in accordance with the concentration of dopant. In the embodiment shown in Figure 1, the length of the optical fiber may have three different values: 2.5 meters, 4.8 meters and 13.2 meters. Spectral properties of the output signal are substantially altered for greater lengths. The fiber length of the fiber 110 in Figure 1 is longer than the optimal length for generating forward signal power for all pump power levels considered. As discussed above, this extra length serves three main purposes. First, the length of fiber beyond optimal produces signal absorption which reduces round trip gain and prevents accidental resonant lasing. Second, this length guarantees the absorption of more than 99% of the pump power across the entire pump band from 955 nm to 995 nm. Finally, since the backward signal is the desired output, a greater length for the fiber 110 advantageously reduces the forward signal. Any photons emitted in the forward direction are not available for emission in the backward direction. The forward signal serves only to saturate the gain for the backward signal. Those experimental observations will be confirmed by the theoretical analysis of the quantum efficiency of long fibers as discussed hereinafter.

The fiber source 100 preferably includes a first mirror 128 that is mounted proximate to the first end 112 of the optical fiber 110. In the embodiment shown in Figure 1, the mirror 128 is inclined at an angle of 45° with respect to the horizontal. The mirror 128 is advantageously a dichroic mirror having substantially 100% reflectivity at a first range of optical wavelengths, corresponding to the wavelengths of the pump signal, and having substantially no reflectivity at a second range of wavelengths, corresponding to the wavelengths of the emitted signal. The dichroic mirror 128 filters out the pump light from the output light to be detected. The structure of such a dichroic mirror is well known in the art.

The fiber source 100 of the present invention further includes an optical pump source 130 which generates a pump optical signal represented by an arrow 132 at a wavelength $\lambda_p$. The pump source used in the embodiment of Figure 1 is an Argon-ion pumped Ti:sapphire laser tunable across the entire pump band near 980 nm. Ti:sapphire lasers are readily available for experimental purposes. The pump band near 980 nm does not suffer from excited state absorption. Other available pump sources are, for example, a laser diode emitting at 1490 nm or at 980 nm. A laser diode emitting at 1490 nm is advantageous as the pump light wavelength is close to the output light wavelength. At this wavelength, there is also no excited state absorption, which increases the efficiency of conversion. A styryl-13 dye laser can also be used. This pump source emits radiation at a wavelength of 980 nm. Other pump sources can be selected that emit radiation at other wavelengths. For example, an Argon-ion laser emits radiation at 514 nm. This source, however, suffers from excited state absorption.

The optical pump source 130 is aligned with respect to the dichroic mirror 128 and the longitudinal axis of the first end portion 116 of the optical fiber 110 so that the pump optical signal 132 is reflected on the first dichroic mirror 128 and is introduced into the first end portion 116 of the optical fiber 110 via the first end 112.

The pump optical signal 132 may be focused on the longitudinal axis of the first end portion 116 of the optical fiber 110 by a first lens 134, as illustrated in Figure 1. In the embodiment shown in Figure 1, the lens is a 18x objective with a measured coupling efficiency of 47%. The lens working distance in the embodiment of Figure 1 was selected to be long enough to keep the reflections into the fiber 110 below -50 dB.

The pump optical signal 132 introduced into the first end portion 116 propagates in the optical fiber 110 towards the second end 114. As the pump optical signal 132 propagates towards the second end 114, the optical energy of the pump optical signal 132 is absorbed by the Erbium doping ions of the optical fiber 110, causing the ions to change state. When the ions relax (i.e., return to their original stable state), photons are emitted at an emission wavelength that is longer than the pump wavelength. This emission effect is known to the art and has been used advantageously to produce superfluorescent broadband sources by pumping an Erbium-doped fiber with a pump optical signal of sufficient intensity to cause spontaneous emission in a random manner so as to provide an output signal having a low temporal coherence. See, for example, U.S. Patent No. 4,637,025.

Such superfluorescent light sources are specifically constructed so that the emitted light passes directly out of the first end or the second end of the optical fiber.

In the embodiment of Figure 1, some of the spontaneously emitted light is initially directed toward the first end 112 of the optical fiber 110. This emitted light is referred to as the backward signal. Some of the spontaneously emitted light is also directed toward the second end 114 of the fiber. This emitted light is referred to as the forward signal.

The backward signal exits the first end 112 of the optical fiber 110, passes through the dichroic mirror 128 and is collected by the detector 150. In order to filter out any pump light that may be present in the output beam, the detector 150 may also comprise an optical filter 152 such as a gallium arsenide wafer.

The experimental results obtained with three different lengths of fiber in the embodiment of Figure 1 indicate that it is possible to obtain high backward quantum efficiencies with long fibers. The forward-generated signal is strongly attenuated for fibers exceeding a couple of meters. In the embodiments of Figure 1, the fiber 110 was longitudinally pumped at 976 nm. For the three lengths of fiber selected, the quantum efficiency measured was greater than 50 %. The results are as follows:

| Length (m) | 13.2 | 4.8 | 2.5 |
|---|---|---|---|
| Pump power (mW) | 272 | 251 | 272 |
| Backward output power (mW) | 123 | 93 | 109 |
| Quantum efficiency (%) | >50 | >50 | >50 |

The quantum efficiency for the backward signal can reach values greater than 50%, unlike the four-level systems where the quantum efficiency cannot exceed 50% in either the backward direction or the forward direction.

The above results can now be best understood in the light of a theoretical model of a three-level superfluorescent fiber source.

Computer Model of A Three-Level Superfluorescent Fiber Source

The following analysis is based on a computer model of a three-level SFS and adequately predicts the important experimental observations described above. Though the various parameters values used in these results are for a particular Erbium-doped fiber, the conclusions are applicable to a broad range of waveguides.

Figure 2 schematically shows the model used in this analysis. It consists of a pump source 200, a doped fiber 210 and partial reflectors 212 and 214 having reflection coefficients R1 and R2 at the signal wavelength. In order to suppress resonant oscillation, the net round-trip gain, including reflection losses, must be well below unity. For the high single-pass gain cases of interest (40-50 dB), this generally implies an extremely low feedback level on at least one of the fiber ends.

The model assumes an ideal three-level laser system, in which each absorbed pump photon results in the transfer of an ion from the ground state to the excited state. Transitions between the excited state and the ground state are assumed to be purely radiative. This laser transition is also assumed to be homogeneously broadened. Depending on operating conditions and the fiber composition, a 3 dB gain linewidth can extend over 25 nm or more. The pump and signal waves exhibit characteristic modal profiles associated with the fiber parameters. The transverse spatial dependence can be expressed through the effective areas associated with the pump and signal modes. Additionally, the model allows for feedback from both ends of the SFS, which is essential to modeling the SFS in practical systems.

The behavior of an SFS is determined by the interaction between the population densities of the various electronic energy levels in the laser medium and the optical signals propagating in the fiber. Because the signal exists over a broad spectrum and experiences gain which is dependent on the optical signal frequency $\nu_s$, a general approach to describing the signal evolution along the fiber utilizes the power spectral densities (PSD's) of the forward ($S^+(\nu_s,z)$) and backward ($S^-(\nu_s,z)$) propagating signals,

$$\frac{dS_\delta^\pm(\nu_s,z)}{dz}=\pm N_d(\{\sigma_s(\nu_s)\,a(z)+[1-a(z)]\sigma_a(\nu_s)\}\frac{A_c}{A_s}S_s^\pm(\nu_s,z)+2\sigma_a(\nu_a) \qquad (2)$$

where $N_d$ is the dopant concentration, $\sigma_e(\nu_s)$ and $o_a(\nu_s)$ are the signal emission and absorption cross sections, $A_c$ and $A_s$ are the core area and the effective signal cross-sectional area, and h is the Planck constant. The fraction of ions in the excited state is expressed by the parameter $a(z)$,

$$a(z)=\frac{N_2}{N_d}=\frac{\dfrac{P_P(z)}{I_{p\,sat}A_p}+\dfrac{\tau}{A_s}\displaystyle\int\sigma_s(\nu_s)\frac{S_s(\nu_s,z)}{h\nu_s}d\nu_s}{1+\dfrac{P_P(z)}{I_{p\,sat}A_p}+\dfrac{\tau}{A_s}\displaystyle\int[\sigma_s(\nu_s)+\sigma_a(\nu_a)]\frac{S_s(\nu_s,z)}{h\nu_s}d\nu_s} \qquad (3)$$

where $N_2$ is the upper laser level population density, $\tau$ is the spontaneous lifetime, $A_p$ is the effective pump cross-sectional area, and the total signal PSD is $S_s(\nu_s,z)=S_s^+(\nu_s,z)+S_s^-(\nu_s,z)$. The pump saturation intensity $I_{p\,sat}$ is given by

$$I_{p\,sat}=\frac{h\nu_p}{\tau\sigma_p} \qquad (4)$$

where $\nu_s$ is the pump optical frequency and $\sigma_p$ is the pump ground state absorption cross section. Since the pump can be assumed to be a narrowband signal, it is preferable to consider the pump power $P_p(z)$ rather than its PSD, whose evolution is governed by

$$\frac{dP_p(z)}{dz}=-N_d\{\sigma_p[1-a(z)]+\sigma_p'a(z)\}\frac{A_c}{A_p}P_p(z) \qquad (5)$$

where $\sigma_p'$ is the pump excited state absorption cross section. The term involving $\sigma_p$ represents excitation of ions from the ground state to the pump level, which subsequently decay to the excited state. The second term represents absorption of pump photons by these excited state ions. See the article by P.R. Morkel and R.I. Laming, "Theoretical Modeling of Erbium-Doped Fiber Amplifiers with Excited-State Absorption," Opt. Lett., vol. 14, no. 19, pp. 1062-1064, 1989.

In Erbium, these ions quickly decay back to the excited state through various mechanisms which do not usefully contribute to the SFS operation. The net effect of this excited state absorption (ESA) is thus to waste pump photons, notably in regions of the fiber where the excited-state population is substantial. By pumping at appropriate wavelengths (notably around 980 nm and 1480 nm), the $\sigma_p'$ can be made so low as to be negligible. See for example the article by R.I. Laming, S.B. Poole, and E.J. Tarbox, "Pump Excited-State Absorption in Erbium-Doped Fibers," Opt. Lett., vol. 13, no. 12, pp. 1084-1086, 1988 and the article by E. Snitzer, H. Po, F. Hakimi, R. Tumminelli, and B.C. McCollum, "Erbium Fiber Laser Amplifier at 1.55 μm with Pump at 1.49 and Yb Sensitized Er Oscillator," in Tech. Dig. Optical Fiber Commun. Conf. (Washington, D.C.), 1988, post-deadline paper PD-2.

Equations (2)-(5) can be solved simultaneously through numerical integration. In an Erbium-doped fiber amplifier, the saturation characteristics are typically dominated by a unidirectional narrow linewidth signal, resulting in considerable computation simplification. In order to model the broadband ASE signals in a SFS, the evolution of multiple discrete spectral lines in both directions is simultaneously calculated using the fourth-order Runge-Kutta method. The presence of appreciable signals propagating in both directions considerably complicates the solution, since the numerical integration naturally proceeds in only a single direction. This results in a need to iteratively adjust the output backward signal levels $S^-(\nu_s,O)$ in order to meet the input backward boundary conditions ($S^-(\nu_s,L)=0$ in the absence of feedback). For n discrete lines, this results in a zero-finding problem for a n-dimensional system of nonlinear equations, which is quite difficult and requires the use of a multidimensional Newton-Raphson technique. See for example the article by W.H. Press, B.P. Flannery, S.A. Teukolsky, and W.T. Vetterling, Numerical Recipes in C, New York; Press Syndicate of the University of Cambridge, 1988.

The Mean Wavelength Approximation

The signal spectra derive their shape from the wavelength dependence of the signal emission and absorption cross sections. In Erbium-doped fibers, though this spectral dependence varies somewhat with the codopants used, two major spectral features are observed consistently from fiber to fiber. See for example the article by E. Desurvire and J.R. Simpson, "Amplification of Spontaneous Emission in Erbium-Doped Single-Mode Fibers," J. Lightwave Technol., vol. 7., no. 5, pp. 835-845, 1989.

In portions of the fiber with highly inverted populations, the gain is maximum around 1530 nm. As the inversion is decreased, the gain peak shifts to a region around 1550 nm.

For fibers into which high pump powers are injected, most of the signal gain occurs in a relatively short length of fiber with a highly inverted population. This leads to a gain dominated by the signal absorption and emission cross sections around the 1530 nm gain peak. Under this condition, when it is desired to predict the total signal power output, independent of spectral characteristics, good agreement with the more rigorous wavelength dependent model can be obtained by considering a single "mean" signal wavelength. The problem can thus be reduced to the consideration of three optical waves as they propagate along the fiber: a unidirectional pump wave $P_p(z)$ and the two counterpropagating signal waves $P_s^+(z)$ and $P_s^-(z)$. Under this approximation, Equation (2) reduces to

$$\frac{dP_p^{\pm}(z)}{dz} = \pm N_d\{\,(\sigma_a + \sigma_s)\,a(z) - \sigma_a\}\frac{A_c}{A_s}P_s^{\pm}(z) + \sigma_a a(z)\,P_o\} \tag{6}$$

where $\sigma_e$ and $\sigma_a$ are the cross sections of the mean signal wavelength $v_s$, $P_o$ is the spontaneous emission contribution given by

$$P_o = 2hv_s\Delta v_s \tag{7}$$

where $\Delta v_s$ is the gain linewidth and the factor of 2 accounts for the two orthogonal polarization states into which spontaneous emission occurs. The expression for a(z) of Equation (3) reduces to

$$a(z) = \frac{\dfrac{P_p(z)}{I_{p\,sat}A_p} + \dfrac{P_p(z)}{I_{sa\,sat}A_p}}{1 + \dfrac{P_p(z)}{I_{p\,sat}A_p} + \dfrac{P_p(z)}{I_{s\,sat}A_p}} \tag{8}$$

where the additional saturation intensities associated with the signals are

$$I_{s\,sat} = \frac{hv_s}{\tau(\sigma_s + \sigma_a)}$$

$$I_{sa\,sat} = \frac{hv_s}{\tau\sigma_a} \tag{9}$$

The results presented below use this simplified mean wavelength model. This was done to allow more straightforward physical intuition into the operation of three-level SFS's. The fiber parameters are those presented in an article by E. Desurvire, C.R. Giles, and J.R. Simpson, "Gain Saturation Effects in High-Speed, Multichannel Erbium-Doped Fiber Amplifiers at $\lambda = 1.53$ microns," J. Lightwave Technol., vol. 7, no. 12, pp. 2095-2104, 1989. They are listed in the following table.

| Table of Fiber Parameters | | |
|---|---|---|
| Parameter | Value | Comment |
| $N_d$ | $6.85 \times 10^{-25}\,m^3$ | Much higher than typical fiber |
| $r_c$ | $2.2\,\mu m$ | Core radius |
| $r_s$ | $3.37\,\mu m^2$ | Effective signal radius |
| $r_p$ | $2.24\,\mu m^2$ | Effective pump radius |
| NA | 0.2 | Numerical aperture |
| $\tau$ | 12 ms | Fluorescence lifetime |
| $\lambda_s$ | $1.53\,\mu m$ | "Average" wavelength |
| $\lambda_p$ | $0.98\,\mu m$ | Pump wavelength |
| $\sigma_c$ | $7.4 \times 10^{-25}{}_m 3$ | At $\lambda_s = 1.53$ nm |
| $\sigma_a$ | $4.4 \times 10^{-25}m^3$ | At $\lambda_s = 1.53$ nm |

Continuation of the Table on the next page

(continued)

| Table of Fiber Parameters | | |
|---|---|---|
| Parameter | Value | Comment |
| $\sigma_p$ | $1.75 \times 10^{-25}m^3$ | At $\lambda_p = 1.53$ nm |
| $\Delta\nu_s$ | $3.2 \times 10^{12}$Hz | $\Delta\lambda_s = 25$ nm |
| $A_p I_{p\ sat}$ | 1.47 mW | Calculated from the above values |
| $A_s I_{s\ sat}$ | 0.328 mW | Calculated from the above values |
| $A_s I_{sa\ sat}$ | 0.879 mW | Calculated from the above values |
| $A_s I_{se\ sat}$ | 0.523 mW | Calculated from the above values |
| $P_o$ | 0.832 $\mu$W | Calculated from the above values |

## Regime of SFS Operation for Long Fibers

To obtain high quantum efficiencies from SFS's, it is necessary to pump at high levels ($P_p$ much greater than $I_{p\ sat}A_p$). Under this condition, the SFS operates in one of several regimes depending on its length. Because the present invention utilizes long fibers, the following analysis will only consider long fibers.

Referring again to Figure 2, as the fiber length is increased, there is a decreasing amount of pump power at the distal end 214 of the fiber 210. The fiber length for which the signal gain at the distal end is zero produces the maximum forward output power; this length can be referred to as the "optimal" length for the forward signal. Equation (6) can be used to show that this occurs where $P_p(L) = I_{p\ sat}A_p\sigma_a/\sigma_e$.

As the fiber length is increased beyond optimum, the pump signal rapidly decays to negligible levels resulting in negative gain in this additional length. It might be assumed that this additional length would have no effect on the backward power level, since there are essentially no pump photons to populate the excited state. This would be true of a four-level system, where the pump signal's absence would imply that the excited state population was zero. However, in a three-level system, the excited state can be populated by ground state signal absorption, though not sufficiently to produce positive gain. Some of these excited state ions are stimulated downward by the forward signal itself. However, others decay spontaneously and are captured by the backward propagating mode. These photons act as an additional "input" signal in the backward direction, and are strongly amplified once they reach the positive gain region. This results in an increase in backward power output over the shorter fiber case.

Of these backward traveling spontaneous photons, those which originate deeper in the negative gain region are less likely to reach the positive gain region and are thus less likely to contribute to the backward output. Additionally, the forward signal power is larger closer to the optimum length. The largest contribution from this effect thus comes from the region just beyond the optimum length. As the fiber length is increased beyond the optimum length, there should be expected decreasing contributions from this effect per unit length added, and the backward power should approach an asymptote.

Reference is now made to Figure 3 which illustrates the signal and pump evolution characteristics for a 4.0 meter long fiber and 100 mW of input pump. In Figure 3, the signal power and the pump power in mW are plotted as a function of the length of the fiber z in meters. The pump curve is designated by the numeral 300, whereas the backward and forward signal powers are respectively characterized by the numerals 310 and 320. Reference is also made to Figure 4 which represents the population inversion parameter a(z) and the normalized signal gain coefficient $(N_2\sigma_e-N_1\sigma_a)/N_d\sigma_e$ as a function of the fiber length z in meters. The two curves are designated by the numerals 330 (population inversion parameter) and 340 (normalized signal gain coefficient). Figure 4 shows that beyond approximately 1 meter, the gain is negative, whereas Figure 3 indicates that the forward power decreases beyond 1 meter. This decrease is relatively slow, since much of the absorbed signal power is recaptured through stimulated emission. The gradual slope is due purely to spontaneous emission, which in this case is the only source of "loss." Figure 4 clearly shows that the effect of the signal on the population densities is clearly evident in the fiber region beyond 3 meters, where the excited state population approaches zero as the forward signal power drops below $I_{s\ sat}A_s$.

## Quantum Efficiency

As noted above, the quantum efficiency (QE) of a SFS is an important parameter. Because the signal and pump power levels can vary widely over the length of the fiber, it is useful to consider a position-dependent incremental quantum efficiency, defined as

$$\eta^{\pm}(z) = \pm \frac{v_p \, dP_z^{\pm}/dz}{v_s \, dP_p/dz} \tag{10}$$

Assuming that there is no excited stage absorption, each absorbed pump photon results in the transfer of an electron from the ground state to the excited state. Prom this excited state, decay back to the ground state can occur through two mechanisms, stimulated and spontaneous emissions. Spontaneous emission is isotropic, and thus only a small fraction (typically on the order of $10^{-3}$) is captured by the guided signal mode propagating in each direction of the fiber; the quantum efficiency of this decay mechanism is thus very low. Stimulated emission is induced by signal photons propagating in the fiber eigenmodes. Because these stimulated photons are spatially coherent with the inducing signal, all photons produced by stimulated emission are captured by the fiber resulting in unity QE for this process.

At low signal levels, excited-to-ground state transitions are dominated by spontaneous emission and the quantum efficiency into the guided signal modes is thus very low. By contrast, as signal levels appreciably exceed $P_s = A_s I_{s\,sat}$, the transitions to the ground state are dominated by stimulated emission and the quantum efficiency approaches unity.

The total quantum efficiency in each direction is particularly important. It is defined as

$$\eta_\tau^+ = \frac{v_p P_s^+(L)}{v_s P_p(O)}, \quad \eta_\tau^- = \frac{v_p P_s^-(O)}{v_s P_p(O)} \tag{11}$$

and related to the incremental quantum efficiency by

$$\eta_\tau^z = \frac{1}{P_p(O)} \int_{P_p(L)}^{P_p(O)} \eta^z(z) \, dP_p \tag{12}$$

The examination of the signal evolution characteristics for various fiber lengths indicates that the forward and backward signals are never simultaneously large. In the maximum gain region, the signals are both small and the incremental quantum efficiency is thus small. On either side of this region, the signals become large, resulting in both high quantum efficiencies and lower gains. It appears that signal saturation (and thus reduced gain) and high quantum efficiency both occur for large signal levels. This would indicate that an SFS should be operated in a highly saturated mode to obtain high quantum efficiency.

As noted above, the backward signal (and thus the backward QE) should approach an asymptote as the fiber length is increased. Reference is now made to Figure 5 which graphically illustrates the forward and backward quantum efficiency (curves 400 and 410 respectively) as a function of fiber length for 100 mW of input pump power. The backward QE curve 410 asymptotically approaches 0.7. At the same time, the forward power curve 400 tends to zero for long fibers as is expected due to the glossy section of fiber. By contrast, the equal forward and backward output power levels of a four-level system imply that neither the forward or backward quantum efficiency can exceed 0.5.

Reference is now made to Figures 6 and 7 which respectively represent the signal power in mW and the quantum efficiency as a function of input power in mW for a 4 meter long fiber. In Figure 6, the backward signal curve and the forward signal curve are designated by the numerals 500 and 510 and are substantially linear. The backward signal 500 exhibits a very low threshold, above which the signal power increases linearly with pump power. The forward signal 510 exhibits a much higher threshold and a much lower slope efficiency, both consequences of the power transfer mechanism discussed above.

In Figure 7, three quantum efficiency curves are plotted: the backward QE curve 600, the forward QE curve 610 and the sum of the backward and forward QE 620. The low backward QE observed at low pump power levels occurs because there is insufficient gain to achieve a highly saturated signal. As the pump power is increased to $P_p \gg A_p I_{p\,sat}$, the backward QE first increases rapidly as indicated by the region 630, but then encounters a region of slow increase to an asymptotic efficiency of approximately 92% (portion 640 of the curve 600). The backward QE does not reach unity for the following reason. Even in the high pump power long fiber limit, the forward power reaches an appreciable peak value within the fiber. Though some of this forward signal is subsequently converted to backward signal through the mechanism discussed above, this transfer is dominated by spontaneous emission, and is thus one of inherently low quantum efficiency. The backward quantum efficiency must therefore fall short of unity by an amount related to this peak forward signal level.

The above general model of a three-level superfluorescent source adequately predicts the experimental observations obtained in the present invention. This model considers fully general large signal conditions. Through the use of this numerical model, the evolution of the various waves along the fiber can be examined as a function of various parameters, notably the pump power level and fiber length; experimentally, only the power levels at the two fiber ends can be measured. The model presented also predicts the quantum efficiencies measured in the present invention and in particular demonstrates that the presence of ground state signal absorption in a three-level system results in backward quantum efficiencies of 90% or more for long fibers driven at high pump power levels. This is quite different from the fourth-level SFS case, where the quantum efficiency in either direction cannot exceed 50%. The present invention advantageously uses this unexpected characteristic of three-level systems.

Sensor Applications

The source of the present invention is particularly useful as a broadband optical source for an optical interferometer sensor such as a rotation sensor. An exemplary rotation sensor 1500 that can be advantageously used in combination with the source of the present invention is illustrated in Figure 8. The rotation sensor 1500 comprises a Sagnac interferometer which includes a light source (S) 1510 which provides an optical input signal $I_{IN}$, represented by an arrow. The light source (S) is advantageously the source of the present invention, for example the embodiment of Figure 1. The input signal $I_{IN}$ may be the backward signal referred to in connection with the description of Figure 1. It is coupled to a first optical waveguide 1514 such as a single-mode birefringent optical fiber. The first optical fiber 1514 includes a first optical fiber segment 1520 that serves as the input to the rotation sensor 1500. The first optical fiber segment 1520 provides a propagation path to a first optical directional coupler (DC) 1524, which, in preferred embodiments of the rotation sensor 1500, is constructed by juxtaposing two fibers. Details of such a coupler are disclosed in U.S. Patent Nos. 4,493,528; 4,536,058; 4,564,262; and 4,601,541.

Those skilled in the art will appreciate that integrated optical couplers may also be utilized.

As set forth in the referenced patents, the first optical fiber segment 1520 is connected to one port of the first directional coupler 1524. The first directional coupler 1524 is formed by juxtaposing a second optical waveguide 1528 with first optical waveguide 1514. The second optical waveguide 1528 may also be a birefringent single-mode optical fiber. The second optical fiber 1528 includes a second optical fiber segment 1532 connected to an adjacent port of the first directional coupler 1524.

The first directional coupler 1524 has two additional ports, one of which is connected to a third optical fiber segment 1540 and the other of which is connected to a fourth optical fiber segment 1544.

In preferred embodiments of the rotation sensor 1500, the first directional coupler 1524 is constructed so that approximately 50% of the optical energy propagating in the first optical fiber segment 1520 from the light source 1510 towards the first directional coupler 1524 is directly transmitted to the third optical fiber segment 1540 and approximately 50% of the optical energy is coupled to the fourth optical fiber segment 1544. It should be understood that the first directional coupler 1524 is bidirectional in that optical energy propagating in the third optical fiber segment 1540 toward the first directional coupler 1524 is divided substantially equally between the first optical fiber segment 1520 and the second optical fiber segment 1528.

The fourth optical fiber segment 1544 is terminated by a first light-absorbing terminator (T) 1550. The first light-absorbing terminator 1550 absorbs substantially all the optical energy incident on it from the fourth optical fiber segment 1544 so that substantially no light is reflected back towards the first directional coupler 1524.

The third optical fiber segment 1540 provides a propagation path from the first directional coupler 1524 to a polarizer (P) 1560. Those skilled in the art will recognize that the polarizer is advantageous in that it reduces certain types of phase errors. If no polarizer is used, reduction of phase errors may be achieved through use of unpolarized light, as described in U.S. Patent No. 4,529,312 and U.S. Patent No. 4,634,282.

The polarizer can be constructed in accordance with a number of different embodiments, and is advantageously constructed in accordance with U.S. Patent No. 4,386,822.

The polarizer 1560 is further connected to a fifth optical fiber segment 1564 such that light incident to the polarizer 1560 from the third optical fiber segment 1540 is output from the polarizer 1560 on the fifth optical fiber segment 1564. As is known to one skilled in the art, a single-mode optical fiber, such as the first optical fiber 1514, typically propagates light in first and second orthogonal polarization modes. The polarizer 1560 operates to block the light in one of the two polarization modes (e.g. , the second polarization mode) so that the light propagating in the fifth optical fiber segment 1564 away from the polarizer 1560 comprises light in substantially only the first polarization modes (i.e., polarized light).

The polarized light from the polarizer 1560 propagates via the fifth optical fiber segment 1564 to a port of a second directional coupler (DC) 1570. The second directional coupler 1570 couples the light to a sixth optical fiber segment 1574 of the first optical fiber 1514. The sixth optical fiber segment 1574 is formed into a loop 1578 which lies in a plane generally perpendicular to the axis around which the loop is to be rotated. The sixth optical fiber segment 1574 returns to an adjacent port of the second directional coupler 1570 which thus closes the loop 1578. The first optical fiber 1514 extends from the second directional coupler 1570 to form a seventh optical fiber segment 1590. The seventh optical fiber segment 1590 is terminated by a second light-absorbing terminator (T), an optical detector (D) 1600 which detects the intensity of the optical energy in the second optical fiber segment 1528 and thus detects the intensity of the combined optical energy from the loop 1578. The detector 1600 provides an electrical output signal on a line 1604 that is responsive to the detected intensity. As is well known in the art, the intensity of the combined optical energy from the loop 1578 depends upon the relative phases of the two counterpropagating optical signals, which in turn depends in part upon the rotation rate of the loop 1578.

Various apparatuses and techniques for converting the detected optical intensity to an output signal representing the magnitude and angular direction of rotation are disclosed in the aforementioned U.S. Patent No. 4,410,275; U.S. Patent No. 4,456,377; U.S. Patent No. 4,487,330; U.S. Patent No. 4,634,282; and U.S. Patent No. 4,637,722.

For example, a drive and detection electronics circuit block 1610 is illustrated. The drive and detection electronics circuit block 1610 provides an electrical output signal on a line 1614 which is coupled to a phase modulator (M) 1618. The phase modulator 1618 is coupled to the sixth optical fiber segment 1574 at a position offset from the center of the loop 1578. The drive and detection electronics circuit block 1610 drives the phase modulator 1618 with a specific frequency that is selected to modulate the phase of the two counterpropagating optical signals $I_{CW}$ and $I_{CCW}$. The drive and detection electronics circuit block 1610 further uses the specific frequency to synchronously demodulate the electrical representation of the optical output signal on the line 1604 to provide an electrical output signal on a line 1630 that represents the rotation rate of the loop 1578. Additional details of the operation of the rotation sensor can be found in the aforementioned U.S. Patent No. 4,410,275; U.S. Patent No. 4,456,377; U.S. Patent No. 4,487,330; U.S. Patent No. 4,634,282; and U.S. Patent No. 4,637,722.

While the rotation sensor depicted in Figure 8 is in closed loop configuration, it will be understood that other configurations may be used, such as described in U.S. Patent No. 4,779,975 or in U.S. Patent No. 5,108,183 or in U.S. Patent No. 5,106,193.

While single-mode fibers have been described in connection with the rotation sensor 1500 of Figure 8, it will be apparent to a person skilled in the art that multimode waveguides can also be used.

Feedback Effects

When used as a source in a system, the consideration of the effects of feedback into the SFS becomes important. This is particularly an interferometer sensor, where the Sagnac loop may act as a mirror. Referring to Figure 8, the Sagnac loop may reflect 10% or more of the light coupled into the loop back into the source 1510.

Due to their high single-pass gain, SFS's are sensitive to feedback effects. Though the substantial signal saturation effects in these fibers tend to moderate feedback sensitivities, they are still sensitive to feedback in the range of -30 dB, which is exceeded in some applications.

Using the computer model presented above, it is possible to calculate how backward signal feedback affects both the forward and backward signals. The effect of spontaneous emission is essentially to continuously inject a signal $P_0$ along the fiber in each direction. As the signal which is fed back to the fiber approaches $P_0$, the signal power levels may change.

Reference is now made to Figure 9 which is a plot of the forward and backward signal power in mW as a function of the pump-end feedback R1. The feedback R1 is the reflection coefficient of the end portion 212 of the fiber 210 of Figure 2 and is defined as the external power reflection back into the guided fiber mode. The feedback R1 affects the forward and backward output signal levels, represented by the curves 1600 and 1610. In this simplified model, the feedback coefficient R2 of the other end of the fiber 210 in Figure 2 is supposed to be zero. It can be found that $R_1 P_s^-(0) = P_0$ for $R_1 = 1.7 \times 10^{-5} = -47$ dB. At this feedback level, there is indeed a small change in the output power levels as indicated by the numeral 1620 for the curve 1600 (forward signal) and the numeral 1630 for the curve 1610 (backward signal). However, the highly saturated gain moderates the effects of input signal variations on output signal levels, and therefore an additional 10 dB of feedback is required to produce large changes in the power levels. This sensitivity to feedback suggests that a fiber gyroscope source using a SFS may advantageously comprise an optical isolator to reduce feedback into the SFS. Feedback may also produce notable changes in the signal spectra. By intentionally feeding back a large fraction of the light into either of the ends of a fiber which is close to optimum, it may be possible to obtain a very high QE source where the QE is near 100%. In the limit of 100% feedback from one side, the configuration of the source is the same as that of a double pass SFS. Unfortunately, such a source is more susceptible to resonant oscillation due to external reflections and may require stringent optical isolation in practical cases.

Various embodiments of a optical fiber light source have been described above. Although the invention has been described with reference to these specific embodiments, the descriptions have been illustrative of the invention and are not intended to be limiting. In particular, the fiber source of the present invention can be doped with any other rare-earth suitable material. The embodiments of the present invention can also be used as amplifiers or as narrow band light sources. Various other modifications and applications may occur to those skilled in the art without departing from the scope of the invention as defined in the appended claims.

**Claims**

1. A light source (100) comprising a pump source coupled to introduce light into an end of an optical waveguide (110) comprised of an active three-level medium which emits light in response to pumping, said waveguide having a forward propagation direction in the direction of the pump light and a backward propagation direction in the direction opposite that of the pump light, characterized in that the length of said waveguide (110) is selected so that substantially more emission is in said backward propagation direction than in said forward propagation direction, and in that the light source includes means for coupling the backward propagating light to an optical apparatus.

2. A light source as claimed in Claim 1, wherein said pumping light includes superfluorescent emission of light in said active medium.

3. A light source as claimed in Claim 1 or 2, wherein said emission is at a second wavelength.

4. A light source as claimed in Claim 1, 2 or 3, wherein said emission in said forward propagation direction is substantially zero.

5. An apparatus, comprising:

an interferometer (1514-1594, Fig. 8);
a pump light source (1510) that emits pump light; and
a light source comprising an optical waveguide (1514) having an end coupled to receive said pump light, the waveguide comprised of a three-level active medium responsive to pumping at a pump wavelength to induce in said active medium emission of a light signal at a second wavelength, the emitted light signal comprising a forward signal (Icw) and a backward signal (Iccw) propagating in opposite directions, characterized in that the length of said waveguide is such that the quantum efficiency of said backward signal is greater than 50%, and in that the light source includes means for coupling the backward signal to the interferometer.

6. An apparatus as claimed in Claim 5, wherein said interferometer comprises a Sagnac interferometer.

7. An apparatus as claimed in Claim 5, wherein said optical waveguide comprises an Erbium-doped single mode optical fiber.

8. A method of manufacturing a light source comprising an optical waveguide comprised of a three-level active medium, said method comprising the steps of:

optically coupling a pump source having a pump wavelength to an end of said active medium to cause said active medium to emit a light signal comprising a forward signal and a backward signal which propagate in opposite directions; and characterized by
selecting the length of the waveguide (110) so that the quantum efficiency of said backward signal is greater than 50%; and
coupling the backward signal to an optical apparatus.

9. A method of manufacturing a light source as defined in Claim 8, further comprising the step of selecting the active material of the active medium among the rare earth group.

10. A method of manufacturing a light source as claimed in Claim 8, further comprising the step of selecting said length so that said forward signal is substantially zero.

11. A light source (100) as claimed in Claim 1, wherein said light source is pumped by a laser diode (130).

12. A light source (100) as claimed in Claim 1, wherein said active medium comprises Erbium.

13. A light source (100) as claimed in Claim 1, wherein said waveguide (110) comprises an optical fiber having an input end (112) and an output end (114), and having a reflector (128) positioned proximate to said input end (112) of said optical fiber.

14. A light source (100) as claimed in Claim 13, wherein said reflector (128) is substantially reflective to said emitted light signal and substantially transmissive to pumping light (132).

15. A light source (100) as claimed in Claim 13, wherein said reflector (128) comprises a dichroic mirror.

16. A light source (100) as claimed in Claim 1, wherein the quantum efficiency of said light signal propagating in said backward direction is greater than 50%.

**Patentansprüche**

1. Lichtquelle (100) mit einer Pumpquelle, die zum Einleiten von Licht an ein Ende eines optischen Wellenleiters (110) mit einem Dreiniveau-Medium gekoppelt ist, welches durch das Pumpen veranlaßt Licht emittiert, wobei der Wellenleiter eine vorwärts verlaufende Fortpflanzungsrichtung in der Richtung des Pumplichtes und eine rückwärts verlaufende Fortpflanzungsrichtung in der dem Pumplicht entgegengesetzten Richtung aufweist, dadurch gekennzeichnet, daß die Länge des Wellenleiters (110) so bemessen ist, daß wesentlich mehr Strahlung in der Rückwärts-Fortpflanzungsrichtung erfolgt als in der Vorwärts-Fortpflanzungsrichtung, und dadurch, daß die Lichtquelle eine Einrichtung aufweist, um das sich rückwärts fortpflanzende Licht an ein optisches Gerät anzukoppeln.

2. Lichtquelle nach Anspruch 1, bei der das Pumplicht eine superfluoreszierende Lichtemission in dem aktiven Medium einschließt.

3. Lichtquelle nach Anspruch 1 oder 2, bei der die Emission bei einer zweiten Wellenlänge erfolgt.

4. Lichtquelle nach Anspruch 1, 2 oder 3, bei der die Emission in der vorwärts verlaufenden Fortpflanzungsrichtung im wesentlichen Null ist.

5. Gerät mit:

   einem Interferometer (1514-1594, Fig. 8);

   einer Pumplichtquelle (1510), welche Pumplicht emittiert; und

   einer Lichtquelle mit einem optischen Wellenleiter (1514), von dem ein Ende zur Aufnahme des Pumplichtes angekoppelt ist und der ein aktives Dreiniveau-Medium enthält, um bei einer Pumpwellenlänge zum Induzieren der Emission eines Lichtsignals bei einer zweiten Wellenlänge in dem aktiven Medium zu pumpen, wobei das emittierte Lichtsignal ein Vorwärtssignal (Icw) und ein Rückwärtssignal (Iccw) aufweist, die sich in entgegengesetzten Richtungen fortpflanzen, dadurch gekennzeichnet, daß die Länge des Wellenleiters derart ist, daß die Quantenausbeute des Rückwärtssignals größer als 50% ist, und dadurch, daß die Lichtquelle eine Einrichtung aufweist, um das Rückwärtssignal an das Interferometer anzukoppeln.

6. Gerät nach Anspruch 5, bei dem das Interferometer ein Sagnac-Interferometer aufweist.

7. Gerät nach Anspruch 5, bei dem der optische Wellenleiter eine mit Erbium dotierte optische Einfachmodus-Faser aufweist.

8. Verfahren zum Herstellen einer Lichtquelle mit einem aus einem aktiven Dreiniveau-Medium bestehenden optischen Wellenleiter, mit folgenden Verfahrensschritten:

   optisches Ankoppeln einer Pumpquelle mit einer Pumpwellenlänge an ein Ende des aktiven Mediums, um das aktive Medium zum Emittieren eines Lichtsignals mit einem Vorwärtssignal und einem Rückwärtssignal zu veranlassen, die sich in entgegengesetzten Richtungen fortpflanzen; und charakterisiert durch

   Bemessen der Länge des Wellenleiters (110) dahingehend, daß die Quantenausbeute des Rückwärtssignals größer als 50% ist; und

   Koppeln des Rückwärtssignals an ein optisches Gerät.

9. Verfahren zum Herstellen einer Lichtquelle nach Anspruch 8, mit dem weiteren Schritt des Auswählens des aktiven Stoffes für das aktive Medium aus der Gruppe der Seltenen Erden.

10. Verfahren zum Herstellen einer Lichtquelle nach Anspruch 8, mit dem weiteren Schritt des Bemessens der Länge in der Weise, daß das Vorwärtssignal im wesentlichen Null ist.

**11.** Lichtquelle (100) nach Anspruch 1, bei der die Lichtquelle von einer Laserdiode gepumpt wird.

**12.** Lichtquelle (100) nach Anspruch 1, bei der das aktive Medium Erbium enthält.

**13.** Lichtquelle (100) nach Anspruch 1, bei der der Wellenleiter (110) eine optische Faser mit einem Eingangsende (112) und einem Ausgangsende (114) sowie einem Reflektor (128) aufweist, der angrenzend an das Eingangsende (112) der optischen Faser angeordnet ist.

**14.** Lichtquelle (100) nach Anspruch 13, bei der der Reflektor (128) für das emittierte Lichtsignal im wesentlichen reflektierend und für das Pumplicht im wesentlichen durchlässig ist.

**15.** Lichtquelle (100) nach Anspruch 13, bei der der Reflektor (128) einen dichroitischen Spiegel aufweist.

**16.** Lichtquelle (100) nach Anspruch 1, bei der die Quantenausbeute des sich in der Rückwärtsrichtung fortpflanzenden Lichtsignals größer als 50% ist.


**Revendications**

**1.** Source lumineuse (100), comportant une source de pompage couplée pour introduire de la lumière dans l'extrémité d'un guide d'ondes optique (110) composé d'un élément actif à trois niveaux qui émet de la lumière en réponse au pompage, ledit guide d'ondes ayant une direction de propagation vers l'avant dans la direction de la lumière de pompage et une direction de propagation vers l'arrière dans la direction opposée à celle de la lumière de pompage, caractérisée en ce que la longueur dudit guide d'ondes (110) est choisie de façon à ce qu'il y ait sensiblement plus d'émission dans ladite direction de propagation vers l'arrière que dans ladite direction de propagation vers l'avant et en ce que la source lumineuse comprend des moyens pour coupler la lumière se propageant vers l'arrière à un appareil optique.

**2.** Source lumineuse selon la revendication 1, dans laquelle ladite lumière de pompage comprend une émission de lumière superfluorescente dans ledit élément actif.

**3.** Source lumineuse selon la revendication 1 ou 2, dans laquelle ladite émission se fait à une deuxième longueur d'onde.

**4.** Source lumineuse selon la revendication 1, 2 ou 3, dans laquelle ladite émission dans ladite direction de propagation vers l'avant est sensiblement nulle.

**5.** Appareil comportant:

un interféromètre (1514-1594, Fig. 8);
une source lumineuse de pompage (1510) qui émet de la lumière de pompage; et
une source lumineuse comprenant un guide d'ondes optique (1514) ayant une extrémité couplée pour recevoir ladite lumière de pompage, le guide d'ondes comprenant un élément actif à trois niveaux sensible au pompage à une longueur d'onde de pompage pour induire dans ledit élément actif l'émission d'un signal lumineux à une deuxième longueur d'onde, le signal lumineux émis comprenant un signal avant (Icw) et un signal arrière (Iccw) se propageant dans des directions opposées, caractérisé en ce que la longueur dudit guide d'ondes est telle que le rendement quantique dudit signal arrière est supérieur à 50% et en ce que la source lumineuse comporte des moyens pour coupler le signal arrière à l'interféromètre.

**6.** Appareil selon la revendication 5, dans lequel l'interféromètre comprend un interféromètre Sagnac.

**7.** Appareil selon la revendication 5, dans lequel ledit guide d'ondes optique comprend une fibre optique monomode dopée à l'erbium.

**8.** Procédé de fabrication d'une source lumineuse comprenant un guide d'ondes optique comprenant un élément actif à trois niveaux, ledit procédé comportant les étapes de:

couplage optique d'une source de pompage ayant une longueur d'onde de pompage à une extrémité dudit élément actif de façon à ce que ledit élément actif émette un signal lumineux comprenant un signal avant et un signal arrière qui se propagent dans des directions opposées ; et caractérisé par

la sélection d'une longueur du guide d'ondes (110) de façon à ce que le rendement quantique dudit signal arrière soit supérieur à 50%; et

le couplage du signal arrière à un appareil optique.

9.  Procédé de fabrication d'une source lumineuse telle que définie dans la revendication 8, comprenant en outre l'étape de sélection d'une matière active de l'élément actif parmi le groupe des terres rares.

10. Procédé de fabrication d'une source lumineuse telle que revendiquée dans la revendication 8, comprenant en outre l'étape de sélection de ladite longueur de façon à ce que le signal avant soit sensiblement nul.

11. Source lumineuse (100) telle que revendiquée dans la revendication 1, dans laquelle ladite source lumineuse est pompée par une diode laser (130).

12. Source lumineuse (100) telle que revendiquée dans la revendication 1, caractérisée en ce que ledit élément actif comprend de l'erbium.

13. Source lumineuse (100) telle que revendiquée dans la revendication 1, dans laquelle ledit guide d'ondes (110) comporte une fibre optique ayant une extrémité d'entrée (112) et une extrémité de sortie (114), et ayant un réflecteur (128) positionné à proximité de ladite extrémité d'entrée (112) de ladite fibre optique.

14. Source lumineuse (100) telle que revendiquée dans la revendication 13, dans laquelle ledit réflecteur (128) peut substantiellement réfléchir ledit signal lumineux émis et peut substantiellement transmettre la lumière de pompage.

15. Source lumineuse (100) telle que revendiquée dans la revendication 13, dans laquelle ledit réflecteur (128) comprend un miroir dichroïque.

16. Source lumineuse (100) telle que revendiquée dans la revendication 1, dans laquelle le rendement quantique dudit signal lumineux se propageant dans ladite direction arrière est supérieur à 50%.

FIG. I

FIG. 2

*FIG. 3*

*FIG. 4*

FIG. 5

EP 0 476 800 B1

## FIG. 6

## FIG. 7

FIG. 8

EP 0 476 800 B1

*FIG. 9*